# EUROPÄISCHE PATENTSCHRIFT

(11) **EP 2 267 315 B1**
(45) Veröffentlichungstag und Bekanntmachung des Hinweises auf die Patenterteilung: **09.08.2017**
(21) Anmeldenummer: 10164988.7
(22) Anmeldetag: 04.06.2010
(51) Int. Cl.: F15B 9/12, F15B 15/10, F02B 37/18

(54) **Elektropneumatischer Stellantrieb**
Electropneumatic actuator
Mécanisme de commande électropneumatique

(30) Priorität: 26.06.2009 DE 102009027227
(43) Veröffentlichungstag der Anmeldung: 29.12.2010
(73) Patentinhaber: Robert Bosch GmbH, 70442 Stuttgart (DE)
(72) Erfinder: Baeuerle, Michael, 71735, Eberdingen (DE); Uhl, Stephan, 71706, Markgroeningen (DE); Schneider, Helmut, 72631, Aichtal (DE)

(56) Entgegenhaltungen:
- DE-A1- 3 201 071
- DE-A1-102006 028 015
- FR-A3- 2 428 776

## Beschreibung

### Stand der Technik

DE 10 2006 028 015 A1 bezieht sich auf einen pneumatischen Stellantrieb mit integrierter elektropneumatischer Positionsregelung. Es wird ein elektropneumatischer Steller zur Betätigung von Aggregaten einer Verbrennungsmaschine offenbart, wobei in dem Steller ein Stellglied aufgenommen ist. Dem Stellglied ist ein Steuerschieber zugeordnet, der abhängig von der relativen Position des Stellgliedes eine Druckkammer des Gehäuses belüftet, entlüftet oder verschließt. Das Stellglied ist hohl ausgeführt und umfasst sowohl einen Belüftungskanal als auch einen Entlüftungskanal.

Der aus DE 10 2006 028 015 A1 bekannte pneumatische Stellantrieb erfordert eine sehr hohe Fertigungsgüte, d.h. entsprechend genaue Toleranzen, die fertigungstechnisch nur sehr aufwendig herzustellen sind. Anstelle des aus DE 10 2006 028 015 A1 bekannten Konzeptes, können an pneumatischen Stellantrieben auch Plattenventile eingesetzt werden. Plattenventile sind recht robust, fertigungstechnisch sehr einfach herzustellen, erfordern jedoch eine Vorspannung, die auf ein Ventilelement des Plattenventiles aufzubringen ist. Im Allgemeinen wird diese Vorspannung mittels einer Vorspannfeder erzeugt. Eine Vorspannfeder wiederum hat den Nachteil, dass diese aus regelungstechnischen Gründen von Nachteil ist, da durch die Vorspannfeder Hysterese-Effekte entstehen. Diese Hysterese-Effekte sind aus regelungstechnischen Gründen höchst unerwünscht.

Ein anderer bekannter elektropneumatischer Stellantrieb ist aus der DE 32 01 071 A1 bekannt.

### Offenbarung der Erfindung

Die vorliegende Erfindung hat den Vorteil, einen elektropneumatischen Stellantrieb bereit zu stellen, bei dem hinsichtlich der Regelung keine Hysterese-Effekte auftreten. Dies wird dadurch erreicht, dass im Gehäuse mit einem Druckanschluss und einem zweiten Druckanschluss verbundene Steueröffnungen ortsfest vorgesehen sind, die in die Arbeitskammer münden, wobei die Steueröffnungen mit einer Außenkontur mindestens eines dünnwandigen, axial bewegbaren Schiebereinsatzes zur Belüftung oder Entlüftung oder Verschluß der Arbeitskammer zusammenwirken.

Der erfindungsgemäß vorgeschlagene elektropneumatische Stellantrieb umfasst in einer ersten Ausführungsvariante aus beispielsweise PTFE gefertigte Einsätze mit Steueröffnungen, die in das Gehäuse des elektropneumatischen Stellantriebes eingelassen sind. Diese leicht gekrümmt ausgebildeten aus beispielsweise PTFE gefertigten Einsätze weisen Steueröffnungen auf, die von einer ersten Druckseite auf beispielsweise Atmosphärendruck zu einer zweiten Druckseite auf beispielsweise Unterdruck verlaufen und mittels eines in Axialrichtung in Bezug auf das Gehäuse des elektropneumatischen Stellantriebes beweglich ausgebildeten Schiebereinsatzes zusammen wirken. Der mindestens eine Schiebereinsatz wird bevorzugt halbzylindrisch ausgebildet und ist im ungespannten Zustand, d.h. im nicht eingebauten Zustand, beispielsweise geringfügig größer hinsichtlich seiner Radialerstreckung als die Innenkante der Einsätze. Bei der Montage des mindestens einen Schiebereinsatzes kann dieser in Bezug auf seinen ungespannten Zustand geringfügig gestaucht, d.h. vorgespannt werden, wodurch in vorteilhafter Weise Fertigungstoleranzen ausgeglichen werden können, ohne das es aufwendig herzustellender Passungen und Toleranzen bedarf. Die Zahl der Steueröffnungen in dem Einsatz, der bevorzugt aus PTFE-Material gefertigt wird, entspricht vorzugsweise der Zahl von Steueröffnungen, die in der halbzylindrisch gekrümmt ausgebildeten Fläche des mindestens einen Schiebereinsatzes ausgeführt sind.

In einer weiteren, zweiten Ausführungsvariante können die gemäß der ersten Ausführungsvariante bevorzugt aus PTFE-Material gefertigten Einsätze auch unmittelbar im Gehäuse ausgebildet sein. In Abwandlung zur erstgenannten Ausführungsvariante sind bei dieser Ausführungsvariante keine separaten Einsätze erforderlich, sondern die Steueröffnungen können direkt im Gehäuse des elektropneumatischen Stellantriebes ausgebildet werden. In dieser Ausführungsvariante ist lediglich die Unterseite, d.h. die dem mindestens einen Schiebereinsatz zugewandte Seite mit einer PTFE-Beschichtung versehen, um eine möglichst reibungsarme Bewegung des mindestens einen Schiebereinsatzes relativ zu den an der Innenkontur ausgeführten Steueröffnungen zu ermöglichen.

Beide Ausführungsvarianten zeichnen sich dadurch aus, dass der mindestens eine Schiebereinsatz federnd ausgebildet ist, im ungespannten Zustand geringfügig größer ist als die Innenkontur des Gehäuses bzw. der PTFE-Einsätze im Bereich der dort mündenden Steueröffnungen und dass durch den federnd ausgebildeten Schieber mindestens einen Schiebereinsatz Toleranzen im Gehäuse ausgeglichen werden können.

Der mindestens eine Schiebereinsatz wird als Dünnblechschieber ausgebildet und weist eine Materialstärke in der Größenordnung zwischen 0,05 mm und 0,1 mm auf. Die ungespannte Außenkontur des Schiebereinsatzes im demontierten Zustand ist geringfügig größer als die im eingebauten Zustand darauf gleitende Innenkontur des Gehäuses bzw. darin eingesetzter Gleitelemente, die bevorzugt aus PTFE-Material gefertigt werden.

Durch diese Ausführungsmöglichkeit wird die Notwendigkeit zur hochpräzisen Fertigung umgangen, da Toleranzen und Maßverschiebungen in Folge von Fertigungsabweichungen, Wärmedehnung und Verschleiß durch die in radialer Richtung wirkende Federwirkung der bevorzugt als Dünnblechschieber ausgebildeten Schiebereinsätze ausgeglichen werden können. Andererseits ergibt sich bei der erfindungsgemäß vorgeschlagenen Lösungsmöglichkeit eine hohe Resistenz gegenüber Schmutzpartikeln, da diese zwar zu einer erhöhten Leckage hinsichtlich des Luftverbrauchs führen, jedoch nicht zum Versagen oder einem Blockieren des Schiebereinsatzes führen, wie das bei klassischen Schieberlösungen mit engsten Passungen der Fall ist. Die erfindungsgemäß vorgeschlagene Lösung gestattet darüber hinaus einen Rückgriff auf einen einfachen und kostengünstigen Grob-Luftfilter mit geringem Druckabfall.

Ergänzend weist der erfindungsgemäß vorgeschlagene elektropneumatische Stellantrieb dem mindestens einen Schiebereinsatz zugeordnete, hammerartig wirkende Stangenelemente auf (Impulshammer). An den jeweiligen Stirnseiten des mindestens einen Schiebereinsatzes wird ein definierter Freiweg zwischen der hammerartig wirkenden Stange und der Stirnseite des mindestens einen Schiebereinsatzes realisiert. Damit kann die bei ausfahrendem Anker sich aufbauende kinetische Energie gemäß des Impulserhaltungssatzes auf den mindestens einen Schiebereinsatz übertragen werden und mit einem dadurch realisierten Impuls können bei gegebener Magnetkraft deutlich größere Reibkräfte überwunden werden. Die durch den "Hammerschlag" erzeugte Losbrechbewegung erlaubt es, größere Reibkräfte zu überwinden im Vergleich zu der Lösung, wenn die hammerartig wirkende Stange und der mindestens eine Schiebereinsatz als eine Baueinheit ohne Freiweg zwischen den beiden Komponenten ausgeführt sind. Dies bedeutet, dass der erfindungsgemäß vorgeschlagene elektropneumatische Stellantrieb ausgesprochen resistent gegenüber Verschmutzungen ist, d.h. gegenüber Partikeln, die sich zwischen der Außenkontur des mindestens einen Schiebereinsatzes und der Innenkontur der gefertigten Einsätze angelagert haben. Über den Impuls, der durch die hammerartig wirkende Stange bei Betätigung von der Magnetbaugruppe ausgelöst werden kann, kann eine temporäre Schwergängigkeit, die möglicherweise eine Blockade verursachen kann, überwunden werden.

Dies bedeutet wiederum, dass hinsichtlich der Luftqualität geringere Anforderungen zu stellen sind, d.h. die Luftfilter durchaus gröber ausgelegt werden können, da das erfindungsgemäß vorgeschlagene Steuerkonzept des elektropneumatischen Stellantriebes unempfindlich gegenüber Schmutzpartikeln, auch größeren Schmutzpartikeln ist.

### Kurzbeschreibung der Zeichnung

Anhand der Zeichnung wird die Erfindung nachstehend eingehender beschrieben.

Es zeigt
- Figur 1: einen Längsschnitt durch den erfindungsgemäß vorgeschlagenen elektropneumatischen Stellantrieb,
- Figur 2: eine perspektivische Ansicht von bevorzugt aus PTFE-Material gefertigten Einsätzen mit montierten einander gegenüberliegenden Schiebereinsätzen und hammerartig wirkender Impulsstange,
- Figur 3: eine perspektivische Ansicht des Ambosses,
- Figur 4: einen Schnitt durch den elektropneumatischen Stellantrieb im Bereich der aus PTFE-Material gefertigten Einsätze und Schiebereinsätzen im ungespannten sowie im gespannten Zustand,
- Figur 5: eine perspektivische Ansicht der Baugruppe PTFE-Einsätze und
- Figur 6: eine perspektivische Ansicht 4 und 6, 7 perspektivische Ansichten der Schiebereinsätze samt Steueröffnungen und Anlageflächen sowie Ausschnitten, die die Freiwege erzeugen.

### Ausführungsvarianten

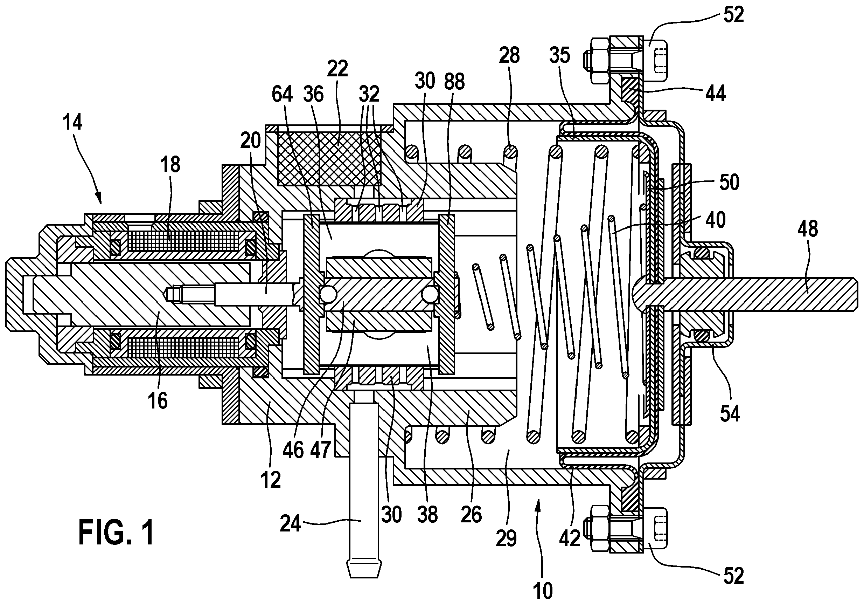

Der Darstellung gemäß Figur 1 ist ein Schnitt durch den erfindungsgemäß vorgeschlagenen elektropneumatischen Stellantrieb zu entnehmen, bei dem eine Steuerung eines beispielsweise auf Atmosphärendruck befindlichen ersten Druckanschlusses und eines auf einem gegenüber dem ersten Druckanschluß geringeren Druck, der im Folgenden als Unterdruck bezeichnet wird, befindlichen zweiten Druckanschlusses durch in axialer Richtung bewegbare Schiebereinsätze realisiert ist.

Der elektropneumatische Stellantrieb 10 umfasst ein Gehäuse 12, in dem eine Magnetbaugruppe 14 aufgenommen ist. Die Magnetbaugruppe 14 umfasst einen Anker 16 sowie einen den Anker 16 umschließenden Elektromagneten 18. Der Darstellung gemäß Figur 1 ist zu entnehmen, dass der Anker 16 eine Ankerverlängerung 20 aufweist. Aus der Darstellung gemäß Figur 1 geht hervor, dass an der Ankerverlängerung 20 der Magnetbaugruppe 14 ein stangenförmig ausgebildeter erster Mitnehmerstift 64 angeordnet ist.

Das Gehäuse 12 des elektropneumatischen Stellantriebes 10 weist einen ersten Druckanschluss 22 auf, in dem sich beispielsweise ein in Figur 1 erkennbarer Luftfilter befindet. Der erste Druckanschluss 22 ist mit einem ersten Druck beaufschlagbar, bei dem es sich beispielsweise um Atmosphärendruck handelt. Auf der dieser gegenüberliegenden Seite des Gehäuses 12 verläuft ein zweiter Druckanschluss 24, der von einen gegenüber dem ersten Druck geringeren zweiten Druck beaufschlagt wird. Der zweite Druckanschluss 24 wird im Folgenden auch als Unterdruckanschluss bezeichnet. Der Unterdruck ist beispielsweise ein geringerer Druck als Atmosphärendruck und durch eine Unterdruckquelle erzeugbar.

Im Gehäuse 12 ist darüber hinaus ein Hülsenteil 26 ausgebildet, das von einer Rückstellfeder 28 beaufschlagt ist. Die Rückstellfeder 28 stützt sich mit ihrer gegenüberliegenden Seite an einer Stützscheibe 50 ab, durch welche eine Membran 42 stabilisiert wird. Die Membran 42 ist als Rollmembran ausgebildet und an einer Einspannstelle 44 zwischen dem Gehäuse 12 des elektropneumatischen Stellantriebes 10 und einem Deckelteil 54 eingespannt. Das Deckelteil 54 und das Gehäuse 12 sind über Befestigungselemente 52, die z.B. als Spannschrauben ausgestaltet sein können, miteinander verbunden. Im Bereich der Trennfuge zwischen dem Deckelteil 54 und dem Gehäuse 12 liegt auch die Einspannstelle 44 der einen Rollbalg aufweisenden Membran 42. Die Membran 42 trennt einen in dem Gehäuse 12 angeordneten Arbeitsdruckraum 29 auf der der Rückstellfeder 28 zugewandten Seite von einem in Figur 1 zwar dargestellten, aber nicht näher bezeichneten, auf der von der Rückstellfeder abgewandten Seite der Membran vorgesehenen zweiten Druckraum, der sich beispielsweise über einen ebenfalls nicht dargestellten Anschluss auf Atmosphärendruckniveau befindet.

Aus der Darstellung gemäß Figur 1 geht hervor, dass gemäß der dort dargestellten Ausführungsvariante Einsätze 30 von dem Hülsenteil 26 des Gehäuses 12 umschlossen sind. Die Einsätze 30 werden bevorzugt aus einem Material wie PTFE gefertigt und weisen hervorragende Gleiteigenschaften auf. Wie aus der Darstellung gemäß Figur 1 des Weiteren hervorgeht, verlaufen in den einander gegenüberliegenden Einsätzen 30, die bevorzugt aus PTFE-Material gefertigt werden, Steueröffnungen 32. Unterhalb der bevorzugt aus PTFE-Material gefertigten Einsätze 30 des Gehäuses 12 befinden sich ein erster Schiebereinsatz 36 sowie diesem gegenüberliegend ein zweiter Schiebereinsatz 38.

Beide Schiebereinsätze 36, 38 stützen sich auf einem Haltenocken 47 eines Ambosses 46 ab. Der erste Schiebereinsatz 36 und der zweite Schiebereinsatz 38 sind bevorzugt als Dünnblechschieber ausgeführt und weisen eine Materialstärke in der Größenordnung von wenigen 1/100stel mm zwischen 0,05 mm und 0,01 mm auf.

Wenngleich in der Darstellung gemäß Figur 1 vom Gehäuse 12 umschlossene, bevorzugt aus PTFE-Material gefertigte Einsätze 30 dargestellt sind, können diese in einem anderen Ausführungsbeispiel auch unmittelbar im Gehäuse 12 des elektropneumatischen Stellantriebes 10 ausgeführt sein. In dieser Ausführungsvariante ist die den Schiebereinsätzen 36 bzw. 38 zuweisende Seite des Gehäuses 12 mit einer PTFE-Beschichtung versehen, um die Gleiteigenschaften zwischen der Außenkontur der Schiebereinsätze 36, 38 und der Innenseite des Gehäuses 12, in dem in dieser Ausführungsvariante dann die Steueröffnung 32 mündet, zu verbessern.

Aus der Darstellung gemäß Figur 1 geht des Weiteren hervor, dass die Rückstellfeder 28 die Arbeitskammer 29 durchsetzt, in der ihrerseits eine als Kegelfeder ausgebildete Regelfeder 40 aufgenommen ist. Die als Kegelfeder ausgebildete Regelfeder 40 stützt sich ebenfalls an der Stützscheibe 50, die die Membran 42 stabilisiert, ab. Außer durch die Stützscheibe 50, an der sich die Rückstellfeder 28 sowie die Regelfeder 40 abstützen, wird die Membran 42 darüber hinaus durch einen glockenförmigen Einsatz 35 abgestützt, in dem ein stangenförmig ausgebildetes Stellglied 48, welches schlussendlich zu betätigen ist, aufgenommen ist.

Der Elektromagnet 18 der Magnetbaugruppe 14 betätigt den Anker 16 bzw. dessen Ankerverlängerung 20, sodass auch die an der Ankerverlängerung 20 aufgenommenen Mitnehmerstifte 64, 88 betätigt werden.

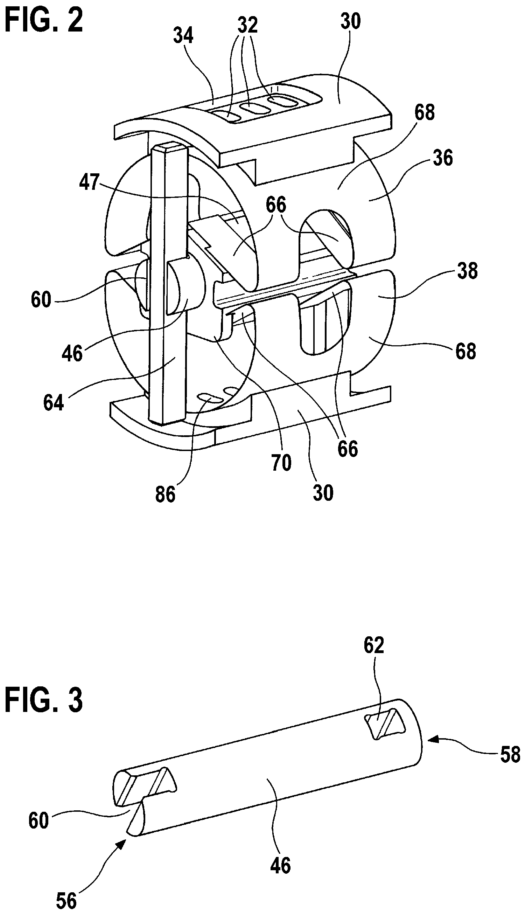

Der Darstellung gemäß Figur 2 ist eine perspektivische Ansicht der Baugruppe aus Haltenocken 47, Schiebereinsätze 36, 38, aus PTFE-Material gefertigten Einsätzen 30 sowie erster Mitnehmerstift 64 zu entnehmen.

Die bevorzugt aus PTFE-Material gefertigten Einsätze 30, die jedoch aus einem anderen geeigneten Material gefertigt sein können, sind gekrümmt ausgeführt und umfassen jeweils eine Vertiefung 34, in der die Steueröffnungen 32 münden. Die Steueröffnungen 32 münden darüber hinaus auf der im unteren Bereich von Figur 2 erkennbaren Innenseite bzw. der Innenkontur des Einsatzes 30.

Aus der Darstellung gemäß Figur 2 geht hervor, dass die Schiebereinsätze 36, 38 jeweils fingerförmig ausgebildete Anlageflächen 66 aufweisen. Diese Anlageflächen 66 liegen bevorzugt an den Stirnseiten der Schiebereinsätze 36 und 38. Die Anlageflächen 66, die sich auf dem Haltenocken 47 des Ambosses 46 abstützen, gehen in eine gekrümmte Außenkontur 68 über, deren Krümmung >180° beträgt. Ein seitliches Verrutschen der Anlageflächen 66 an dem Haltenocken 47 wird durch eine Rippe 70, die an einer jeden Stirnseite des Haltenockens 47 ausgebildet ist, vermieden.

Die Schiebereinsätze 36, 38 sind im montierten Zustand mit ihren gekrümmte Außenkonturen 68 an die Innenseite der diesen in radialer Richtung gegenüberliegenden Einsätze 30 gestellt, die bevorzugt aus PTFE-Material mit hervorragenden Gleiteigenschaften gefertigt sind.

Um eine sichere Anlage der gekrümmten Außenkontur 68 der Schiebereinsätze 36, 38 an der Innenseite der Einsätze 30 zu gewährleisten, sind die Schiebereinsätze 36, 38 im demontierten Zustand vorzugsweise geringfügig größer als im eingebauten Zustand. Sobald die Schiebereinsätze 36, 38 mit ihren Anlageflächen 66 am Haltenocken 47 des Ambosses 46 montiert sind, werden aufgrund des Übermaßes, die gekrümmt ausgebildeten Außenkonturen 68 an die Unterseiten, d.h. an die Innenkontur der Einsätze 30 angestellt.

Durch diese Ausführung wird die Notwendigkeit zur hochpräzisen Fertigung vermieden, da Toleranzen und Maßverschiebungen in Folge von Fertigungsabweichungen, Wärmedehnung und Verschleiß durch die radiale Federwirkung der Schiebereinsätze 36, 38 ausgeglichen werden. Andererseits ergibt sich durch die erfindungsgemäß vorgeschlagene Lösung eine hohe Resistenz gegenüber Schmutzpartikeln, die zwischen die relativ zueinander bewegten Flächen der Einsätze 30 und der Schiebereinsätze 36, 38 geraten. Diese können zu einer erhöhten Leckage hinsichtlich des Luftverbrauches führen, jedoch nicht zu einem Versagen oder Blockieren des Schiebersystems, wie dies bei klassischen Schieberlösungen mit engsten Passungen der Fall ist.

Aus der Darstellung gemäß Figur 2 geht darüber hinaus der hammerartig wirkende erste Mitnehmerstift 64 vor, der in einer Nut 60 des Ambosses 46 aufgenommen ist.

Die hammerartig wirkenden beiden Mitnehmerstifte 64, 88 stehen, wie bereits im Zusammenhang mit Figur 1 erläutert wurde, in Verbindung mit der Ankerverlängerung 20 der Magnetbaugruppe 14. Bei einer Betätigung des Elektromagneten 18 der Magnetbaugruppe 14 schlägt der hammerartig wirkende erste Mitnehmerstift 64 an den diesem zuweisenden Stirnseiten der Schiebereinsätze 36, 38 an und wirkt einer temporären Schwergängigkeit entgegen, für den Fall, dass ein Partikel zwischen der gekrümmt ausgebildeten Außenkante 68 der Schiebereinsätze 36, 38 und der Innenseite der bevorzugt aus PTFE-Material gefertigten Einsätze 30 geraten ist. Über den durch den ersten Mitnehmerstift 64 übertragbaren Impuls, kann eine Blockade bzw. eine temporäre Schwergängigkeit der Schiebereinsätze 36, 38 im Bezug auf die Innenkontur der Einsätze 30, die bevorzugt aus PTFE-Material gefertigt werden, beseitigt werden.

Der Darstellung gemäß Figur 3 ist in perspektivischer Wiedergabe der Amboss 46 zu entnehmen, der in der Darstellung gemäß Figur 2 von dem Haltenocken 47 umschlossen ist.

Der Amboss 46 weist an seiner ersten Stirnseite 56 die Nut 60 auf, die der Aufnahme des ersten Mitnehmerstiftes 64 dient und an einer zweiten Stirnseite 58 eine Öffnung 62 auf, die in der Darstellung gemäß Figur 3 als Vierkantöffnung beschaffen ist. Diese dient der Aufnahme eines weiteren zweiten Mitnehmerstiftes 88.

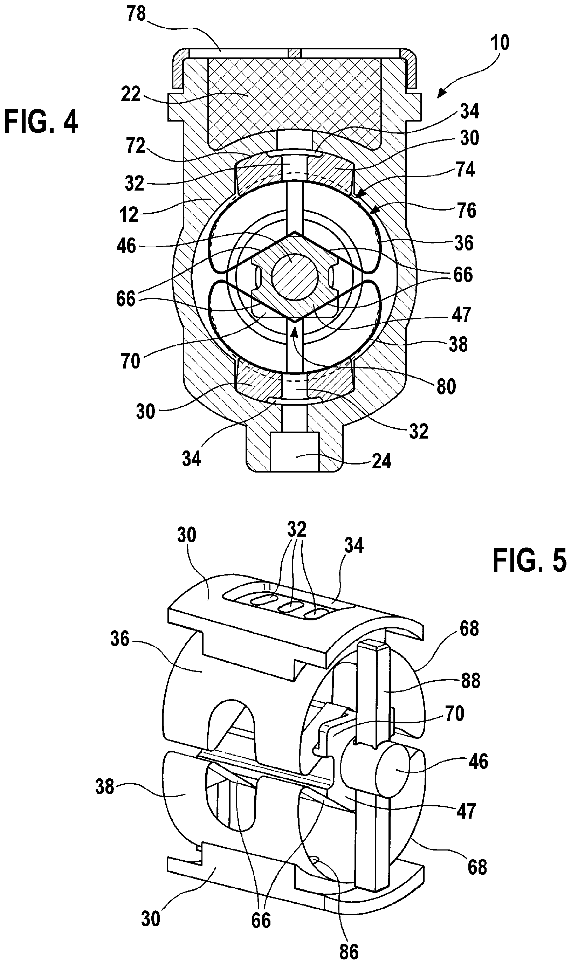

Figur 4 zeigt einen Schnitt durch den erfindungsgemäß vorgeschlagenen elektropneumatischen Stellantrieb 10 gemäß Figur 1.

Aus der Darstellung gemäß Figur 4 geht hervor, dass der in den ersten Druckanschluss 22 eingesetzte Luftfilter im Gehäuse 12 von einem Gehäusedeckel 78 umschlossen ist. In diesem befindet sich eine Öffnung, über die Atmosphärenluft, die durch den Luftfilter an die in Figur 4 oben liegende Seite des in Figur 4 obenliegend angeordneten, in das Gehäuse 12 eingebetteten Einsatzes 30, der bevorzugt aus PTFE-Material gefertigt ist, geleitet wird.

In der mit Bezugszeichen 34 bezeichneten Vertiefung münden die Steueröffnungen 32 auf der Atmosphärenseite.

An der Unterseite des Gehäuses 12 befindet sich der Unterdruckanschluss 24, in dem ein Unterdruckniveau pᵤ ansteht. Der untere, im Gehäuse 12 im elektropneumatischen Stellantrieb 10 angeordnete Einsatz 30, der bevorzugt aus PTFE-Material gefertigt ist, umfasst ebenfalls eine Vertiefung 34, von der aus die Steueröffnungen 32 verlaufen.

Wie aus der Schnittdarstellung gemäß Figur 4 hervorgeht, ist der Amboss 46 von dem Haltenocken 47 umschlossen, an dem die umlaufend ausgebildete Rippe 70 angespritzt ist. Auf dem Haltenocken 47 stützen sich - wie Figur 4 zeigt - die Anlageflächen 66 eines jeden der beiden Schiebereinsätze 36, 38 ab. In Figur 4 sind sowohl der ungespannte Zustand 74 der gekrümmt ausgebildeten Außenkonturen 68 der Schiebereinsätze 36, 38 dargestellt, wie auch deren gespannter Zustand (vgl. Bezugszeichen 76). Im gespannten Zustand 76 liegen die gekrümmt ausgebildeten Außenkonturen 68 der beiden gegenüberliegenden Schiebereinsätze 36, 38 an der Innenkontur der bevorzugt aus PTFE-Material gefertigten Einsätze 30 an. Die Einsätze 30 sind über eine Abdichtung 72 gegen das Gehäuse 12 des erfindungsgemäß vorgeschlagenen elektropneumatischen Stellantriebes 10 abgedichtet. An einer Blechverschweißung 80 sind Flügelabschnitte der Schiebereinsätze 36, 38 miteinander verbunden.

Der Darstellung gemäß Figur 5 ist eine weitere perspektivische Darstellung der Baugruppe aus Einsätzen 30 aus PTFE-Material, Schiebereinsätzen 36, 38, Amboss 46 und Haltenocken 47, sowie einem weiteren Mitnehmerstift 88 zu entnehmen.

Wie die perspektivische Ansicht gemäß Figur 5 zeigt, befindet sich an der zweiten Stirnseite 58 des Ambosses 46 ein zweiter Mitnehmerstift 88. Dieser ist in die in Figur 3 dargestellte Vierkantöffnung 62 eingelassen und dient zur Einleitung eines Impulses auf die Stirnseite der Schiebereinsätze 36, 38 in Gegenrichtung, entgegen der Wirkung des ersten eine temporäre Schwergängigkeit aufhebenden Mitnehmerstiftes 64, wie in der Figur 2 dargestellt. Der Darstellung gemäß Figur 5 lässt sich entnehmen, dass die Schiebereinsätze 36, 38 mit ihren Anlageflächen 66 auf dem Haltenocken 47 des Ambosses 46 abgestützt sind. Die umlaufenden Rippen 70 des Haltenockens 47 verhindern, dass die Anlageflächen 66 bei Betätigung des Ambosses 46 durch die Magnetbaugruppe 14 abrutschen und die Vorspannung der gekrümmt ausgebildeten Außenkontur 68 gegen die Innenkontur der Einsätze 30 abnimmt.

Mittels der in den perspektivischen Wiedergaben gemäß der Figuren 2 und 5 dargestellten Mitnehmerstifte 64 bzw. 88 ist sichergestellt, dass bei Bestromung der Magnetbaugruppe 14 eine temporäre Schwergängigkeit zwischen der gekrümmt ausgebildeten Außenkontur 68 der Schiebereinsätze 36, 38 bei eingeklemmten Partikeln zwischen diesen und der Innenkontur der bevorzugt aus PTFE-Material gefertigten Einsätze 30 gewährleistet ist, und die Betätigung des erfindungsgemäß vorgeschlagenen elektropneumatischen Stellantriebes 10 auch bei eingeklemmten Partikeln gewährleistet ist.

Wie Figur 5 des Weiteren zeigt, strecken sich die Steueröffnungen 32 durch die Einsätze 30 ausgehend von einer in diesen ausgebildeten Vertiefung 34. An der Mantelfläche der Steueröffnungen 32, welche an die Vertiefung 34 angrenzen, kann zur Verwirklichung der Abdichtung 72 wie in Figur 4 dargestellt, eine Dichtmasse aufgebracht sein.

Der perspektivischen Darstellung gemäß Figur 5 lässt sich entnehmen, dass sich die Steueröffnungen 32, ausgehend von der Vertiefung 34, jeweils durch die Materialstärke der Einsätze 30 erstrecken und an der Innenkontur münden. Ebenso ist der Darstellung gemäß Figur 5 zu entnehmen, dass die durch die Haltenocken 47 abgestützten Anlageflächen 66 der Schiebereinsätze 36, 38 bewirken, dass die gekrümmt ausgeführte Außenkontur 68 der Schiebereinsätze 36, 38 flächig an die Unterseite, d.h. die Innenkontur der Einsätze 30, die bevorzugt aus PTFE-Material gefertigt werden, angestellt wird.

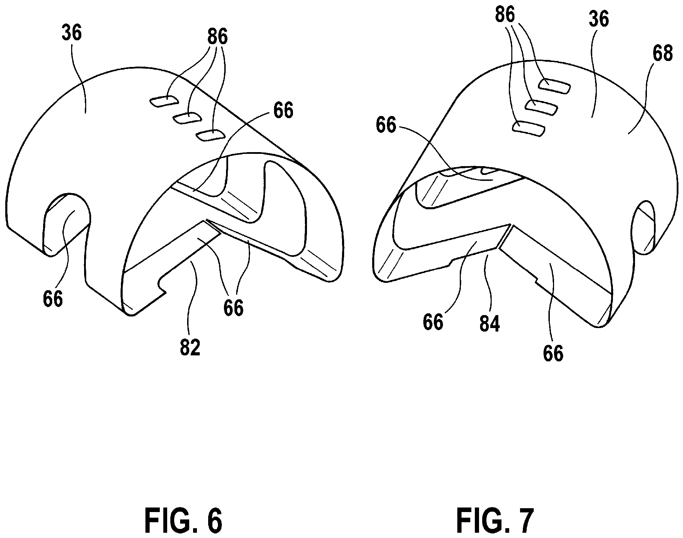

Den Figuren 6 und 7 sind Schiebereinsätze 36, 38 in perspektivischer Ansicht zu entnehmen.

Aus den Figuren 6 und 7 geht hervor, dass an den Stirnseiten des Schiebeeinsatzes 36 unterhalb der gekrümmt ausgebildeten Außenkontur 68 Anlageflächen 66 verlaufen. Die Anlageflächen 66 erstrecken sich unterhalb der gekrümmt ausgebildeten Außenkontur 68, deren Krümmung über einen Winkelbereich von mindestens 180°, bevorzugt 200° bis 240° verläuft. In der gekrümmt ausgebildeten Außenkontur 68 des ersten Schiebereinsatzes 36 befinden sich Steueröffnungen 86, deren Anzahl zur Anzahl der Steueröffnungen 32, den bevorzugt aus PTFE-Material gefertigten Einsätzen 30 liegt.

Die Materialstärke der Schiebereinsätze 36, 38 gemäß der perspektivischen Darstellung in den Figuren 6 und 7 liegt in der Größenordnung zwischen 0,05 mm und 0,15 mm, bevorzugt im Bereich zwischen 0,07 mm und 0,09 mm. Aufgrund dieser geringen Materialstärke weisen die Schiebereinsätze 36, 38 eine hohe Elastizität in radialer Richtung auf.

Aus der Darstellung gemäß der Figuren 6 und 7 geht überdies hervor, dass an den Stirnseiten des Schiebereinsatzes 36 Ausschnitte 82, 84 angebracht sind. Unter Rückgriff auf die Figuren 2 und 5 dienen diese Ausschnitte 82, 84 zur Erzeugung eines auf den ersten Schiebereinsatz 36 dienenden Impulses entweder durch den ersten Mitnehmerstift 64 im Bereich der Ankerverlängerung 20 oder durch den zweiten Mitnehmerstift 88, eingelassen in die Öffnung 62 des Ambosses 46. Die kinetische Energie, die bei Bestromung des Elektromagneten 18 erzeugt wird, bewirkt eine Beschleunigung des ersten Mitnehmerstiftes 64 sowie des zweiten Mitnehmerstiftes 88 entsprechend der jeweiligen Betätigungsrichtung, so dass ein hammerartiger Impuls auf die Stirnseiten der Schiebereinsätze 36, 38 ausgeübt wird. Dieser durch das hammerartige Anschlagen des ersten Mitnehmerstiftes 64 bzw. des zweiten Mitnehmerstiftes 88 erzeugte Impuls dient dem Lösen der Schiebereinsätze 36, 38 für den Fall, dass sich ein Partikel zwischen die gekrümmt ausgebildete Außenkontur 68 des Schiebereinsatzes 36 bzw. 38 und die Innenkontur des bevorzugt aus PTFE-Material gefertigten Einsätze 30 geschoben haben sollte.

Die durch den eingeklemmten Partikel zwischen den genannten Komponenten erzeugte Reibkraft bzw. Schwergängigkeit wird durch das Einbringen des Impulses durch den ersten Mitnehmerstift 64 bzw. den zweiten Mitnehmerstift 88 überwunden, so dass eine Bewegung der Schiebereinsätze 36, 38 bei Bestromung des Elektromagneten 14 in die eine oder in die andere Richtung erfolgen kann.

Die Sollposition des Stellgliedes 48 in Figur 1 wird durch eine Bestromung des Elektromagneten 18 eingestellt, Die Magnetkraft des Elektromagneten 18 wirkt dabei der Federkraft der Regelfeder 40 entgegen. Durch die Bestromung des Elektromagneten kann eine Verschiebung des Ankers 16 und des damit verbundenen Ambosses mit den Schiebereinsätzen 36, 38 bewirkt werden. Durch Erhöhung oder Verringerung der Stromstärke lassen sich die Schiebereinsätze 36, 38 in Figur 1 nach links oder rechts verschieben. Infolge der Verschiebung der Schiebereinsätze 36, 38 und in Abhängigkeit von der Richtung der Verschiebung werden entweder die Steueröffnungen 32 auf der Atomsphärendruckseite oder die Steueröffnungen auf der Unterdruckseite mit der Arbeitskammer 20 verbunden und Luft strömt im erstgenannten Fall in die Arbeitsluftkammer 29 ein und im zweiten Fall daraus ab. Der veränderte Druck in der Arbeitskammer 29 führt wiederum zu einer Auslenkung der Membran 42 und des Stellgliedes 48. Da sich auch die Regelfeder 40 auch an der Membran abstützt, hat die Bewegung der Membran 48 schließlich eine weitere Verschiebung der Schiebereinsätze zur Folge, bis sich die Steueröffnungen wieder verschließen und sich eine ausgeregelte Position der Schiebereinsätze einstellt. In der ausgeregelten Position besteht ein Kräftegleichgewicht zwischen der durch die Magnetbaugruppe 14 erzeugten Magnetkraft und der Kraft der Regelfeder 40, die bevorzugt als Kegelfeder ausgebildet ist. In der ausgeregelten Position überdecken und verschließen die Schiebereinsätze 36, 38 sowohl die Steueröffnungen 32 auf der Atmosphärendruckseite als auch die Steueröffnungen 32, die dem Unterdruckanschluss 24 gegenüberliegen, an dem ein Unterdruck pᵤ anliegt. In dieser Position ist die Position der Membranstange, d.h. des Stellglieds 48 ausgeregelt.

Bei Einwirkung einer äußeren Störgröße auf das Stellglied 48 bewirkt eine Verschiebung der mit dem Stellglied verbundenen Membran 42 über die Regelfeder 40 eine Verschiebung der Schiebereinsätze 36,38. Wird beispielsweise das Stellglied 48 in Figur 1 durch die Störgröße nach links gedrückt, so bewegen sich auch die Schiebereinsätze zunächst nach links, da die durch die Regelfeder 40 ausgeübte Kraft die Magnetkraft überwiegt. Infolgedessen erfolgt eine Belüftung der Arbeitskammer 29 durch Freigabe der Verbindung zum Atmoshärendruckanschluss 22. Der daraufhin steigende Druck in der Arbeitskammer 29 drückt die Membran 50 mit dem Stellglied 48 wieder zurück in die Sollposition. Schließlich verschließen die Schiebereinsätze wieder die Steueröffnungen auf der Atmosphärendruckseite. Wird das Stellglied entsprechend in Figur 1 durch die Störgröße nach rechts gezogen, so überwiegt die Kraft die durch den Elektromagneten 18 der Magnetbaugruppe 14 ausgeübt wird und die in diesem Fall die durch die Regelfeder 40 ausgeübte Kraft übersteigt. Darauf resultiert eine Entlüftung der Arbeitskammer 29 und das Stellglied wird durch den Druckabbau in der Arbeitskammer 29 zurück in die Sollposition gezogen. Auf diese Weise erfolgt durch Öffnen der jeweiligen Steueröffnungen 32 eine entsprechende Be- oder Entlüftung der Arbeitskammer 29, bis die Sollposition auch bei geänderten äußeren Lasten wieder erreicht ist. Zwischen den Steueröffnungen 32 in den Einsätzen 30 aus PTFE-Material und Steueröffnungen 86 in den Schiebereinsätzen 36, 38 ist dabei vorteilhaft eine Überdeckung in der Größenordnung weniger Zehntelmillimeter realisiert.

## Patentansprüche

1. Elektropneumatischer Stellantrieb (10) mit einem Gehäuse (12) und einer Magnetbaugruppe (14) zur Betätigung eines Ankers (16,20) mit einem ersten Druckanschluss (22), der mit einem ersten Druck (pₐₜₘ) beaufschlagbar ist, und einem zweiten Druckanschluss (24), an den ein gegenüber dem ersten Druck geringerer zweiter Druck (pᵤ) anlegbar ist, sowie mit einer durch eine Membran (42) begrenzten Arbeitskammer (29), wobei im Gehäuse (12) mit dem ersten Druckanschluss (22) und dem zweiten Druckanschluss (24) verbundene Steueröffnungen (32) ortsfest vorgesehen sind, die in die Arbeitskammer (29) münden und wobei die Steueröffnungen (32) mit einer Außenkontur (68) mindestens eines axial beweglichen Schiebereinsatzes (36, 38) zur Belüftung oder Entlüftung oder Verschluss der Arbeitskammer (29) zusammenwirken, **dadurch gekennzeichnet, dass** der mindestens eine axial bewegliche Schiebereinsatz (36, 38) als dünnwandiger Dünnblechschieber in einer Materialstärke zwischen 0,05 mm und 0,15 mm ausgebildet ist.

2. Elektropneumatischer Stellantrieb (10) gemäß Anspruch 1, **dadurch gekennzeichnet, dass** die Innenkontur des Gehäuses (12) mit den an dieser mündenden Steueröffnungen (32) an mindestens einem in das Gehäuse ortsfest eingelassenen Einsatz (30) ausgebildet ist.

3. Elektropneumatischer Stellantrieb (10) gemäß Anspruch 2, **dadurch gekennzeichnet, dass** der Einsatz (30) aus PTFE-Material gefertigt ist.

4. Elektropneumatischer Stellantrieb (10) gemäß Anspruch 1, **dadurch gekennzeichnet, dass** der mindestens eine Schiebereinsatz (36, 38) als Dünnblechschieber in einer Materialstärke zwischen zwischen 0,06 mm und 0,12 mm und besonders bevorzugt zwischen 0,07 mm und 0,09 mm ausgeführt ist.

5. Elektropneumatischer Stellantrieb (10) gemäß Anspruch 1, **dadurch gekennzeichnet, dass** die Außenkontur (68) des mindestens einen Schiebereinsatzes (36, 38) eine Krümmung von ≥180° aufweist.

6. Elektropneumatischer Stellantrieb (10) gemäß Anspruch 2, **dadurch gekennzeichnet, dass** die Außenkontur (68) eine Anzahl von Steueröffnungen (86) aufweist, deren Anzahl der Anzahl von Steueröffnungen (32) der Innenkontur des Einsatzes (30) entspricht.

7. Elektropneumatischer Stellantrieb (10) gemäß Anspruch 1, **dadurch gekennzeichnet, dass** der mindestens eine Schiebereinsatz (36, 38) mindestens eine Radialspannung erzeugende Anlagefläche (66) umfasst.

8. Elektropneumatischer Stellantrieb (10) gemäß Anspruch 1, **dadurch gekennzeichnet, dass** der mindestens eine Schiebereinsatz (36, 38) an mindestens einer Stirnseite, mindestens einen Ausschnitt (82, 84) umfasst.

9. Elektropneumatischer Stellantrieb (10) gemäß Anspruch 1, **dadurch gekennzeichnet, dass** der Anker (16, 20) der Magnetbaugruppe (14) zumindest einen ersten Mitnehmerstift (64) umfasst, der bei ausfahrendem Anker (16, 20) einen Impuls auf den mindestens einen Schiebereinsatz (36, 38) überträgt.

10. Elektropneumatischer Stellantrieb (10) gemäß Anspruch 8 und 9, **dadurch gekennzeichnet, dass** die Ausschnitte (82, 84) an den mindestens einen Schiebereinsatz (36, 38) zwischen diesem und dem ersten Mitnehmerstift (64) einen Freiweg erzeugen, nach dessen Durchfahren ein Losbrech-Impuls auf den mindestens eine Schiebereinsatz (36, 38) wirkt.

11. Elektropneumatischer Stellantrieb (10) gemäß Anspruch 9, **dadurch gekennzeichnet, dass** der erste Mitnehmerstift (64) an einem Amboss (46) aufgenommen ist, der einen Haltenocken (47) aufweist, an dem sich Anlageflächen (66) des mindestens einen Schiebereinsatzes (36, 38) abstützen.

12. Elektropneumatischer Stellantrieb (10) gemäß Anspruch 2, **dadurch gekennzeichnet, dass** die Steueröffnung (32) des mindestens einen Einsatzes (30) in einer Vertiefung (34) liegen.

13. Elektropneumatischer Stellantrieb (10) gemäß Anspruch 10, **dadurch gekennzeichnet, dass** der Anker (16, 20) einen weiteren, zweiten Mitnehmerstift (88) aufweist, der der Magnetbaugruppe (14) abgewandten Seite der Stirnseite der Schiebereinsätze (36, 38) gegenüber liegt.

## Claims

1. Electropneumatic actuating drive (10) having a housing (12) and a magnet assembly (14) for actuating an armature (16, 20), having a first pressure connector (22) which can be loaded with a first pressure (pₐₜₘ) and a second pressure connector (24), to which a second pressure (pᵤ) can be applied which is lower than the first pressure, and having a working chamber (29) which is delimited by way of a diaphragm (42), control openings (32) which are connected to the first pressure connector (22) and the second pressure connector (24) being provided in a stationary manner in the housing (12), which control openings (32) open into the working chamber (29), and the control openings (32) interacting with an outer contour (68) of at least one axially movable slide insert (36, 38) in order to aerate or ventilate or close the working chamber (29), **characterized in that** the at least one axially movable slide insert (36, 38) is configured as a thin-walled thin sheet metal slide with a material thickness between 0.05 mm and 0.15 mm.

2. Electropneumatic actuating drive (10) according to Claim 1, **characterized in that** the inner contour of the housing (12) with the control openings (32) which open on it is configured on at least one insert (30) which is embedded into the housing in a stationary manner.

3. Electropneumatic actuating drive (10) according to Claim 2, **characterized in that** the insert (30) is manufactured from PTFE material.

4. Electropneumatic actuating drive (10) according to Claim 1, **characterized in that** the at least one slide insert (36, 38) is configured as a thin sheet metal slide with a material thickness between 0.06 mm and 0.12 mm and particularly preferably between 0.07 mm and 0.09 mm.

5. Electropneumatic actuating drive (10) according to Claim 1, **characterized in that** the outer contour (68) of the at least one slide insert (36, 38) has a curvature of ≥ 180°.

6. Electropneumatic actuating drive (10) according to Claim 2, **characterized in that** the outer contour (68) has a number of control openings (86), the number of which corresponds to the number of control openings (32) of the inner contour of the insert (30).

7. Electropneumatic actuating drive (10) according to Claim 1, **characterized in that** the at least one slide insert (36, 38) comprises at least one bearing face (66) which generates radial stress.

8. Electropneumatic actuating drive (10) according to Claim 1, **characterized in that** the at least one slide insert (36, 38) comprises at least one cut-out (82, 84) on at least one end side.

9. Electropneumatic actuating drive (10) according to Claim 1, **characterized in that** the armature (16, 20) of the magnet assembly (14) comprises at least one first driver pin (64) which, in the case of an extending armature (16, 20), transmits a pulse to the at least one slide insert (36, 38).

10. Electropneumatic actuating drive (10) according to Claim 8 and 9, **characterized in that** the cut-outs (82, 84) on the at least one slide insert (36, 38) produce a free travel between the latter and the first driver pin (64), a breakaway pulse acting on the at least one slide insert (36, 38) after the said free travel has been passed through.

11. Electropneumatic actuating drive (10) according to Claim 9, **characterized in that** the first driver pin (64) is received on an anvil (46) which has a holding cam (47), on which bearing faces (66) of the at least one slide insert (36, 38) are supported.

12. Electropneumatic actuating drive (10) according to Claim 2, **characterized in that** the control opening (32) of the at least one insert (30) lie in a depression (34).

13. Electropneumatic actuating drive (10) according to Claim 10, **characterized in that** the armature (16, 20) has a further, second driver pin (88) which lies opposite that side of the end side of the slide insert (36, 38) which faces away from the magnet assembly (14).

## Revendications

1. Entraînement de commande électropneumatique (10) comprenant un boîtier (12) et un module magnétique (14) pour l'actionnement d'un induit (16, 20), comprenant un premier raccord de pression (22) qui peut être sollicité avec une première pression (pₐₜₘ), et un deuxième raccord de pression (24) au niveau duquel peut s'appliquer une deuxième pression (pᵤ) inférieure à la première pression, et comprenant une chambre de travail (29) limitée par une membrane (42), des ouvertures de commande (32) connectées au premier raccord de pression (22) et au deuxième raccord de pression (24) étant prévues de manière fixe dans le boîtier (12), lesquelles débouchent dans la chambre de travail (29) et les ouvertures de commande (32) coopérant avec un contour extérieur (68) d'au moins un insert coulissant déplaçable axialement (36, 38) pour la ventilation ou le désaérage ou la fermeture de la chambre de travail (29), **caractérisé en ce que** l'au moins un insert coulissant déplaçable axialement (36, 38) est réalisé sous forme de coulisseau en tôle mince à paroi mince avec une épaisseur de matériau comprise entre 0,05 mm et 0,15 mm.

2. Entraînement de commande électropneumatique (10) selon la revendication 1, **caractérisé en ce que** le contour intérieur du boîtier (12) est réalisé avec les ouvertures de commande (32) débouchant au niveau de celui-ci sur au moins un insert (30) introduit fixement dans le boîtier.

3. Entraînement de commande électropneumatique (10) selon la revendication 2, **caractérisé en ce que** l'insert (30) est fabriqué en matériau à base de PTFE.

4. Entraînement de commande électropneumatique (10) selon la revendication 1, **caractérisé en ce que** l'au moins un insert coulissant (36, 38) est réalisé sous forme de coulisseau en tôle mince avec une épaisseur de matériau comprise entre 0,06 mm et 0,12 mm et particulièrement préférablement entre 0,07 mm et 0,09 mm.

5. Entraînement de commande électropneumatique (10) selon la revendication 1, **caractérisé en ce que** le contour extérieur (68) de l'au moins un insert coulissant (36, 38) présente une courbure ≥ 180°.

6. Entraînement de commande électropneumatique (10) selon la revendication 2, **caractérisé en ce que** le contour extérieur (68) présente une pluralité d'ouvertures de commande (86), dont le nombre correspond au nombre d'ouvertures de commande (32) du contour intérieur de l'insert (30).

7. Entraînement de commande électropneumatique (10) selon la revendication 1, **caractérisé en ce que** l'au moins un insert coulissant (36, 38) comprend au moins une surface d'appui (66) générant une tension radiale.

8. Entraînement de commande électropneumatique (10) selon la revendication 1, **caractérisé en ce que** l'au moins un insert coulissant (36, 38) comprend au niveau d'au moins un côté frontal au moins une découpe (82, 84).

9. Entraînement de commande électropneumatique (10) selon la revendication 1, **caractérisé en ce que** l'induit (16, 20) du module magnétique (14) comprend au moins une première goupille d'entraînement (64) qui, lorsque l'induit (16, 20) est sorti, transmet une impulsion à l'au moins un insert coulissant (36, 38).

10. Entraînement de commande électropneumatique (10) selon la revendication 8 et 9, **caractérisé en ce que** les découpes (82, 84) génèrent au niveau de l'au moins un insert coulissant (36, 38) entre celui-ci et la première goupille d'entraînement (64) une course libre au bout de laquelle une impulsion de décollement agit sur l'au moins un insert coulissant (36, 38).

11. Entraînement de commande électropneumatique (10) selon la revendication 9, **caractérisé en ce que** la première goupille d'entraînement (64) est reçue au niveau d'une enclume (46) qui présente une came de retenue (47) sur laquelle s'appuient des surfaces d'appui (66) de l'au moins un insert coulissant (36, 38).

12. Entraînement de commande électropneumatique (10) selon la revendication 2, **caractérisé en ce que** l'ouverture de commande (32) de l'au moins un insert (30) sont situées dans un renfoncement (34).

13. Entraînement de commande électropneumatique (10) selon la revendication 10, **caractérisé en ce que** l'induit (16, 20) présente une deuxième goupille d'entraînement supplémentaire (88) qui est opposée au côté du côté frontal de l'insert coulissant (36, 38) opposé au module magnétique (14).
